# EUROPÄISCHE PATENTSCHRIFT

(11) **EP 1 529 082 B1**
(45) Veröffentlichungstag und Bekanntmachung des Hinweises auf die Patenterteilung: **04.10.2006**
(21) Anmeldenummer: 03792169.9
(22) Anmeldetag: 02.07.2003
(51) Int. Cl.: C09B 67/22, C09B 57/00, C08K 5/3415

(54) **PIGMENTZUBEREITUNGEN AUF BASIS VON DIKETOPYRROLOPYRROLPIGMENTEN ZUM VERZUGSFREIEN PIGMENTIEREN VON TEILKRISTALLINEN KUNSTSTOFFEN**
PIGMENT PREPARATIONS BASED ON DIKETOPYRROLOPYRROLE PIGMENTS FOR THE UNDISTORTED PIGMENTATION OF PARTIALLY CRYSTALLINE PLASTICS
PREPARATIONS PIGMENTAIRES A BASE DE PIGMENTS DE DICETOPYRROLOPYRROL, PERMETTANT LA PIGMENTATION SANS DEFORMATION DE MATIERES PLASTIQUES PARTIELLEMENT CRISTALLINES

(30) Priorität: 03.08.2002 DE 10235573
(43) Veröffentlichungstag der Anmeldung: 11.05.2005
(73) Patentinhaber: Clariant Produkte (Deutschland) GmbH, 65929 Frankfurt am Main (DE)
(72) Erfinder: WEBER, Joachim, 65929 Frankfurt am Main (DE); HUNDSDORF, Thomas, 64331 Weiterstadt (DE); GANSCHOW, Matthias, 65195 Wiesbaden (DE)
(86) Internationale Anmeldenummer: PCT/EP2003/007025
(87) Internationale Veröffentlichungsnummer: WO 2004/018566

(56) Entgegenhaltungen:
- EP-A- 0 243 304
- EP-A- 0 952 183
- EP-A- 1 104 789
- WO-A-02/48269
- DE-A- 4 037 556
- DE-A- 4 214 868
- DE-A- 10 106 147
- US-A- 4 791 204
- PATENT ABSTRACTS OF JAPAN vol. 015, no. 145 (C-0823), 12. April 1991 (1991-04-12) & JP 03 026767 A (TOYO INK MFG CO LTD), 5. Februar 1991 (1991-02-05)

## Beschreibung

Die Erfindung betrifft Pigmentpräparationen auf Basis von Diketopyrrolopyrrolpigmenten mit von Diketopyrrolopyrrol abgeleiteten Pigmentdispergatoren zum Einfärben von hochmolekularem Material, besonders zum verzugsfreien Pigmentieren von teilkristallinen Kunststoffen, insbesondere Polyolefinen.

Bei der Einfärbung von teilkristallinen Kunststoffen mit organischen Pigmenten treten häufig Störungen im Material auf, die als Verzugserscheinungen bezeichnet werden. Die Pigmentierung großvolumiger Spritzgussteile, insbesondere solcher aus Polyethylen, führt zu Verformungen, Schrumpfungen und Rissbildungen (innere Spannungen), die je nach Anwendungsgebiet die eingefärbten Artikel unbrauchbar machen. Beispielsweise ist bei Flaschenkästen aufgrund von Deformation mit dem Verlust der Stapelbarkeit zu rechnen.

Diese Nachteile beziehen sich auf die Mehrzahl organischer Pigmente, während sich die anorganischen Pigmente und eine Minderzahl von organischen Pigmenten neutral verhalten. Es wird angenommen, dass Pigmente bei der Erstarrung der Polymerschmelze als Nukleierungszentren wirken und so zu einem zum Verzug neigenden Polymer führen.

Neben Verzugsfreiheit werden bei der Verwendung von Pigmenten zum Färben von Kunststoffen hohe Anforderungen an die anwendungstechnischen Eigenschaften der Pigmente gestellt, wie gute Dispergierbarkeit, hohe Farbstärke, reine Farbtöne von hohem Chroma, hohe Temperaturechtheit, gute Ausblutechtheit und gute Licht- und Wetterechtheiten. Wünschenswert ist außerdem, wenn sich die Einsetzbarkeit der Pigmente nicht auf ein System beschränkt, sondern eine möglichst universelle Einsetzbarkeit gegeben ist. So sollen die Pigmente auch für nicht teilkristalline Kunststoffe und auch zum Färben von anderen hochmolekularen organischen Materialien geeignet sein, und beispielsweise auch in Lack- oder Drucksystemen eingesetzt werden können, wo noch andere Anforderungen gestellt werden, wie beispielsweise niedrige Viskosität der Anreibungsformulierungen oder der fertigen Druck- und Lackfarben, gute Flockungsstabilität, Lösemittel- und Überlackierechtheiten, hoher Glanz, im Falle von Metalliclackierungen hohe Transparenz.

Es sind bereits verschiedene Methoden vorgeschlagen worden, um dem Verzugsproblem entgegenzuwirken. Zu verzugsfreien Pigmenten gelangt man gemäß US 4 880 472 durch mit Siliciumdioxid oder Aluminiumoxid beschichtete Pigmente, gemäß EP 0 296 107 durch ethylcelluloseüberzogene Pigmente, gemäß EP 0 466 646 durch mit polaren Polymeren beschichtete Pigmente, gemäß DE 42 14 868 durch ternäre Pigmentzubereitungen aus Basispigment, durch Sulfonsäure- oder Alkalimetallsulfonatgruppen modifiziertes organisches Pigment und polymerem Ammoniumsalz, gemäß DE 43 13 090 durch organische Pigmente, die einem Niedertemperaturplasma ausgesetzt wurden, gemäß EP 659 840 durch Beschichtung des Pigments mit Phosphatkomplexen und gemäß EP 952 183 durch Einsatz von langkettig substituierten Diketopyrrolopyrrolen.
Die DE 199 58 181 offenbart mit Sulfonamidgruppen substituierte 3,6-bis-([1,1'-biphenyl]-4-yl)-2,5-dihydro-pyrrolo(3,4-c)pyrrol-1,4-dione als Pigmentdispergatoren.

Diese Methoden genügen jedoch nicht immer den heutigen Anforderungen an die oben beschriebenen anwendungstechnischen Eigenschaften. Es bestand die Aufgabe, neue Wege zum verzugsfreien Einfärben von teilkristallinen Kunststoffen mit Diketopyrrolopyrrolpigmenten zu finden.

Es wurde gefunden, dass die Aufgabe überraschenderweise durch eine nachstehend beschriebene neue Pigmentzubereitung gelöst wird.

Gegenstand der Erfindung ist eine Pigmentzubereitung, gekennzeichnet durch einen Gehalt an
a) mindestens einem Diketopyrrolopyrrolpigment der Formel (V) als Basispigment, 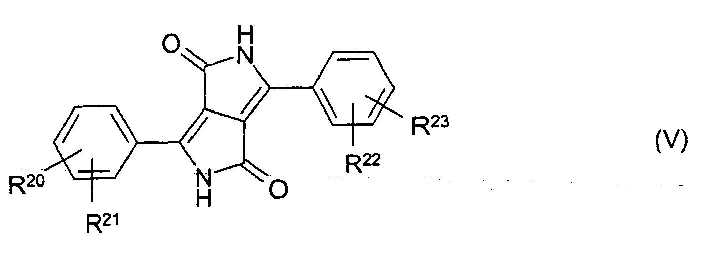 worin
   - R²⁰, R²¹, R²² und R²³: unabhängig voneinander Wasserstoff, Halogen, wie beispielsweise Chlor oder Brom, C₁-C₄-Alkyl, wie beispielsweise Methyl, Ethyl oder tert.-Butyl, C₁-C₄-Alkoxy, wie beispielweise Methoxy, Cyano oder Phenyl bedeuten;
   und
b) mindestens einem Pigmentdispergator der Formel (I), 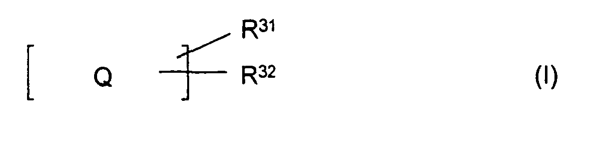 worin
   - R³¹: einen Rest der Formel (VI), (VIII) oder (IX) darstellt,
   - R³²: einen Rest der Formel (VII) darstellt,
   - s oder t: eine Zahl von 0,1 bis 4,0 darstellen 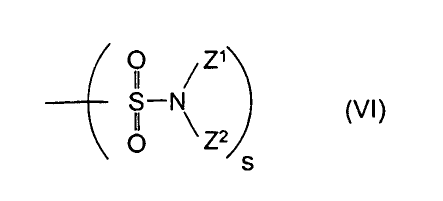 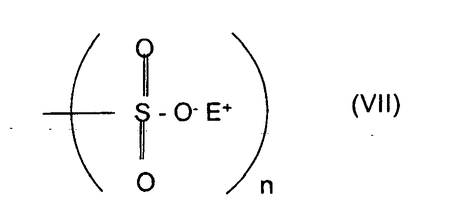 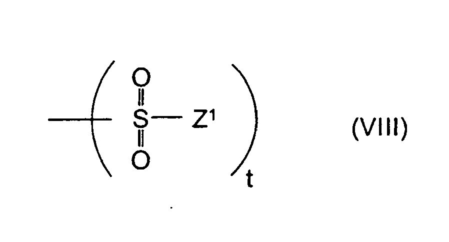 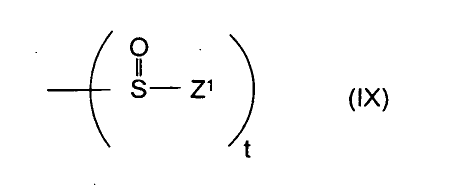
   - n: eine Zahl von 0 bis 2 darstellt, mit der Maßgabe, dass n die Zahl 0 darstellt, wenn R³¹ einen Rest der Formel (VIII) oder (IX) darstellt,
   - E⁺: H⁺ oder das Äquivalent M^{m+}/m eines Metallkations M^{m+} aus der 1. bis 5. Hauptgruppe oder aus der 1. oder 2. oder der 4. bis 8. Nebengruppe des Periodensystems der chemischen Elemente bezeichnet, wobei m eine der Zahlen 1, 2 oder 3 ist, wie z.B. Li¹⁺, Na¹⁺, K¹⁺, Mg²⁺, Ca²⁺, Sr²⁺, Ba²⁺, Mn²⁺, Cu²⁺, Ni²⁺, Co²⁺, Zn²⁺, Fe²⁺, Al³⁺, Cr³⁺ oder Fe³⁺; ein Ammoniumion N⁺R⁹R¹⁰R¹¹R¹², wobei die Substituenten R⁹, R¹⁰, R¹¹ und R¹² unabhängig voneinander jeweils ein Wasserstoffatom, C₁-C₃₀-Alkyl, C₂-C₃₀-Alkenyl, C₅-C₃₀-Cycloalkyl, Phenyl, (C₁-C₈)-Alkyl-phenyl, (C₁-C₄)-Alkylen-phenyl, beispielsweise Benzyl, oder eine (Poly)alkylenoxy-gruppe der Formel -[CH(R⁸⁰)-CH(R⁸⁰)-O]ₖ-H sind, in der k eine Zahl von 1 bis 30 ist und die beiden Reste R⁸⁰ unabhängig voneinander Wasserstoff, C₁-C₄-Alkyl oder, sofern k > 1 ist, eine Kombination davon bedeuten; und worin als R⁹, R¹⁰, R¹¹, und/oder R¹² ausgewiesenes Alkyl, Alkenyl, Cycloalkyl, Phenyl oder Alkylphenyl durch Amino, Hydroxy, und/oder Carboxy substituiert sein können;
   oder wobei die Substituenten R⁹ und R¹⁰ zusammen mit dem quartären N-Atom ein fünf- bis siebengliedriges gesättigtes Ringsystem, das ggf. noch weitere Heteroatome aus der Gruppe O, S und N enthält, bilden können, z.B. vom Pyrrolidon-, Imidazolidin-, Hexamethylenimin-, Piperidin-, Piperazin- oder Morpholin-Typ;
   oder wobei die Substituenten R⁹, R¹⁰, und R¹¹ zusammen mit dem quartären N-Atom ein fünf- bis siebengliedriges aromatisches Ringsystem, das ggf. noch weitere Heteroatome aus der Gruppe O, S und N enthält und an dem ggf. zusätzliche Ringe ankondensiert sind, bilden können, z.B. vom Pyrrol-, Imidazol-, Pyridin-, Picolin-, Pyrazin-, Chinolin- oder Isochinolin-Typ;
   oder worin E⁺ ein Ammoniumion der Formel (Ic) definiert, 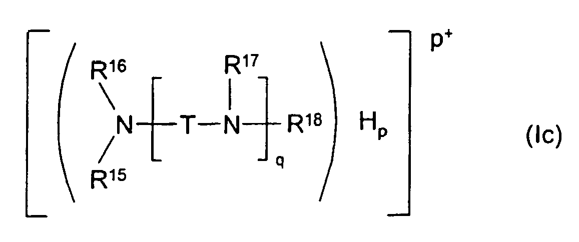 worin
   - R¹⁵, R¹⁶, R¹⁷ und R¹⁸: unabhängig voneinander Wasserstoff oder eine (Poly)alkylenoxygruppe der Formel -[CH(R⁸⁰)-CH(R⁸⁰)O]ₖ-H bedeuten, in der k eine Zahl von 1 bis 30 ist und die beiden Reste R⁸⁰ unabhängig voneinander Wasserstoff, C₁-C₄-Alkyl oder, sofern k > 1 ist, eine Kombination davon bedeuten;
   - q: eine Zahl von 1 bis 10, vorzugsweise 1, 2, 3, 4 oder 5 ist;
   - p: eine Zahl von 1 bis 5, wobei p ≤q+1 ist;
   - T: einen verzweigten oder unverzweigten C₂-C₆-Alkylenrest bedeutet; oder worin T, wenn q > 1 ist, auch eine Kombination von verzweigten oder unverzweigten C₂-C₆-Alkylenresten sein kann;
   - Z¹ und Z²: gleich oder verschieden sind und Wasserstoff oder C₁-C₃₀-Alkyl- oder C₁-C₃₀-Alkenyl-Reste bedeuten, die linear oder verzweigt und unsubstituiert oder durch Halogen, Hydroxy, Hydroxycarbonyl oder C₁-C₆-Alkoxy substituiert sind, wobei der Alkenylrest ein- oder mehrfach ungesättigt sein kann, mit der Maßgabe, dass Z¹ und Z² nicht gleichzeitig Wasserstoff bedeuten;
und
- Q: ein Rest einer Diketopyrrolopyrrolverbindung der Formel (la) ist, 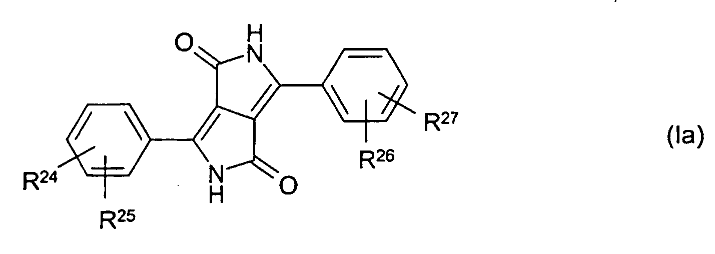
worin R²⁴, R²⁵, R²⁶ und R²⁷ unabhängig voneinander Wasserstoff, Halogen, wie beispielsweise Chlor oder Brom, C₁-C₄-Alkyl, wie beispielsweise Methyl, Ethyl oder tert.-Butyl, C₁-C₄-Alkoxy, wie beispielweise Methoxy, oder Cyano bedeuten.

Von besonderem Interesse sind Pigmentdispergatoren der Formel (I) mit s oder t gleich 0,2 bis 3,0 und n gleich 0 bis 0,5, insbesondere Pigmentdispergatoren der Formel (I) mit s oder t gleich 0,5 bis 2,5 und n gleich 0 bis 0,2.

Von besonderem Interesse sind weiterhin Pigmentdispergatoren der Formel (I), worin
- Z¹ und Z²: gleich oder verschieden sind und C₂-C₁₆-Alkyl bedeuten,
- R²⁴ und R²⁶: jeweils Wasserstoff, und
- R²⁵ und R²⁷: Wasserstoff, Methyl, tert.-Butyl, Chlor oder Cyano bedeuten.

Die erfindungsgemäßen Pigmentdispergatoren lassen sich nach dem Fachmann bekannten Verfahren herstellen.

Unter Basispigment werden Diketopyrrolopyrrolpigmente oder Mischungen von Pigmenten, die mindestens ein Diketopyrrolpyrrolpigment enthalten, verstanden, die auch als übliche Pigmentzubereitungen vorliegen können.
Von besonderem Interesse sind Diketopyrrolopyrrolpigmente der Formel (V) als Basispigmente, worin
R²¹ und R²³ jeweils Wasserstoff und
R²⁰ und R²² gleich oder verschieden sind und Wasserstoff, Methyl, tert.-Butyl, Chlor, Cyano oder Phenyl bedeuten.

Bevorzugte Diketopyrrolopyrrolpigmente, die als Basispigmente eingesetzt werden können, sind beispielsweise C.I. Pigment Orange 71, 73, 81 und C.I. Pigment Red 254, 255, 264, 270, 272.

Wenn das Basispigment neben dem Diketopyrrolopyrrolpigment andere Pigmente enthält, so können diese anderen Pigmente die im Colour Index International Fourth Edition Online angeführten sein.

Die erfindungsgemäßen Pigmentzubereitungen können neben dem a) Basispigment und dem b) Pigmentdispergator noch c) Hilfsmittel enthalten, wie beispielsweise Tenside, nichtpigmentäre und pigmentäre Dispergiermittel, Füllstoffe, Stellmittel, Harze, Wachse, Entschäumer, Antistaubmittel, Extender, Farbmittel zum Nuancieren, Konservierungsmittel, Trocknungsverzögerungsmittel, Additive zur Steuerung der Rheologie, Netzmittel, Antioxidantien, UV-Absorber, Lichtstabilisatoren, oder eine Kombination davon.

Bevorzugte Pigmentzubereitungen im Sinne der vorliegenden Erfindung bestehen im wesentlichen aus
a) 50 bis 99,9 Gew.-%, vorzugsweise 55 bis 99,5 Gew.-%, besonders bevorzugt 60 bis 99 Gew.-%, mindestens eines Basispigments gemäß a),
b) 0,1 bis 25 Gew.-%, vorzugsweise 0,5 bis 20 Gew.-%, besonders bevorzugt 1 bis 15 Gew.-%, mindestens eines, vorzugsweise 1 oder 2, Pigmentdispergators gemäß b),
c) 0 bis 25 Gew.-%, vorzugsweise 0 bis 15 Gew.-% an Hilfsmitteln,
wobei die Anteile der jeweiligen Komponenten auf das Gesamtgewicht der Zubereitung (100 Gew.-%) bezogen sind.

Als Tenside kommen anionische oder anionaktive, kationische oder kationaktive und nichtionische Substanzen oder Mischungen dieser Mittel in Betracht.

Als anionaktive Substanzen kommen beispielsweise Fettsäuretauride, FettsäureN-methyltauride, Fettsäureisethionate, Alkylphenylsulfonate, Alkylnaphthalinsulfonate, Alkylphenolpolyglykolethersulfate, Fettalkoholpolyglykolethersulfate, Fettsäureamid-polyglykolethersulfate, Alkylsulfosuccinamate, Alkenylbernsteinsäurehalbester, Fettalkoholpolyglykolethersulfosuccinate, Alkansulfonate, Fettsäureglutamate, Alkylsulfosuccinate, Fettsäuresarkoside; Fettsäuren, beispielsweise Palmitin-, Stearin- und Ölsäure; Seifen, beispielsweise Alkalisalze von Fettsäuren, Naphthensäuren und Harzsäuren, beispielsweise Abietinsäure, alkalilösliche Harze, beispielsweise kolophoniummodifizierte Maleinatharze und Kondensationsprodukte auf Basis von Cyanurchlorid, Taurin, N,N'-Diethylaminopropylamin und p-Phenylendiamin in Betracht. Besonders bevorzugt sind Harzseifen, d.h. Alkalisalze von Harzsäuren.
Als kationaktive Substanzen kommen beispielsweise quaternäre Ammoniumsalze, Fettaminoxalkylate, oxalkylierte Polyamine, Fettaminpolyglykolether, Fettamine, von Fettaminen oder Fettalkoholen abgeleitete Di- und Polyamine und deren Oxalkylate, von Fettsäuren abgeleitete Imidazoline, und Salze dieser kationenaktiven Substanzen, wie beispielsweise Acetate, in Betracht.
Als nichtionogene Substanzen kommen beispielsweise Aminoxide, Fettalkoholpolyglykolether, Fettsäurepolyglykolester, Betaine, wie Fettsäureamid-N-propyl-betaine, Phosphorsäureester von aliphatischen und aromatischen Alkoholen, Fettalkoholen oder Fettalkoholpolyglykolethern, Fettsäureamidethoxylate, Fettalkohol-alkylenoxid-Addukte und Alkylphenolpolyglykolether in Betracht.

Mit nichtpigmentären Dispergiermitteln sind Substanzen gemeint, die strukturell nicht von organischen Pigmenten abgeleitet sind. Sie werden als Dispergiermittel entweder bereits bei der Herstellung von Pigmenten, oft aber auch bei der Einarbeitung der Pigmente in die zu färbenden Anwendungsmedien, beispielsweise bei der Herstellung von Lacken oder Druckfarben durch Dispergierung der Pigmente in den entsprechenden Bindemitteln, zugegeben. Es können polymere Substanzen sein, beispielsweise Polyolefine, Polyester, Polyether, Polyamide, Polyimine, Polyacrylate, Polyisocyanate, Block-Copolymere daraus, Copolymere aus den entsprechenden Monomeren oder Polymere einer Klasse, die mit wenigen Monomeren einer anderen Klasse modifiziert sind. Diese polymeren Substanzen tragen polare Ankergruppen wie beispielsweise Hydroxy-, Amino-, Imino- und Ammoniumgruppen, Carbonsäure- und Carboxylatgruppen, Sulfonsäure- und Sulfonatgruppen oder Phosphonsäure- und Phosphonatgruppen, und können auch mit aromatischen, nicht pigmentären Substanzen modifiziert sein. Nichtpigmentäre Dispergiermittel können des weiteren auch chemisch mit funktionellen Gruppen modifizierte aromatische, nicht von organischen Pigmenten abgeleitete Substanzen sein. Derartige nichtpigmentäre Dispergiermittel sind dem Fachmann bekannt und zum Teil im Handel erhältlich (z.B. Solsperse®, Avecia; Disperbyk®, Byk-Chemie, Efka®, Efka). Es sollen im Folgenden stellvertretend einige Typen genannt werden, zum Einsatz können jedoch prinzipiell beliebige andere, beschriebene Substanzen kommen, beispielsweise Kondensationsprodukte aus Isocyanaten und Alkoholen, Di- oder Polyolen, Aminoalkoholen oder Di- oder Polyaminen, Polymere aus Hydroxycarbonsäuren, Copolymere aus Olefinmonomeren oder Vinylmonomeren und ethylenisch ungesättigten Carbonsäuren und -estern, urethanhaltige Polymere von ethylenisch ungesättigten Monomeren, urethanmodifizierte Polyester, Kondensationsprodukte auf Basis von Cyanurhalogeniden, Nitroxylverbindungen enthaltende Polymere, Polyesteramide, modifizierte Polyamide, modifizierte Acrylpolymere, Dispergiermittel mit kammartiger Struktur aus Polyestern und Acrylpolymeren, Phosphorsäureester, von Triazin abgeleitete Polymere, modifizierte Polyether, oder von aromatischen, nichtpigmentären Substanzen abgeleitete Dispergiermittel. Dabei werden diese Grundstrukturen vielfach weiter modifiziert, beispielsweise durch chemische Umsetzung mit weiteren, funktionelle Gruppen tragenden Substanzen oder durch Salzbildung.
Mit pigmentären Dispergiermitteln sind Pigmentdispergatoren gemeint, die sich von einem organischen Pigment als Grundkörper ableiten und durch chemische Modifizierung dieses Grundkörpers hergestellt werden, beispielsweise saccharinhaltige Pigmentdispergatoren, piperidylhaltige Pigmentdispergatoren, von Naphthalin oder Perylen abgeleitete Pigmentdispergatoren, Pigmentdispergatoren mit funktionellen Gruppen, die über eine Methylengruppe mit dem Pigmentgrundkörper verknüpft sind, mit Polymeren chemisch modifizierte Pigmentgrundkörper, Sulfosäure-, Sulfonamid- oder Sulfosäureestergruppen haltige Pigmentdispergatoren, Ether- oder Thioethergruppen haltige Pigmentdispergatoren, oder Carbonsäure-, Carbonsäureester- oder Carbonamidgruppen haltige Pigmentdispergatoren.

Die erfindungsgemäßen Pigmentzubereitungen können als vorzugsweise wässrige Presskuchen zum Einsatz kommen, in der Regel handelt es sich jedoch um feste Systeme von rieselfähiger, pulverförmiger Beschaffenheit oder um Granulate.

Die erfindungsgemäß erzielbare Verbesserung des Verzugs beruht vermutlich auf einer Modifizierung der Oberflächenstruktur der Basispigmente mit dem Pigmentdispergator. So sind in einer Reihe von Fällen die Wirksamkeit des Pigmentdispergators und die Qualität der damit erzeugten Pigmentzubereitungen abhängig vom Zeitpunkt der Zugabe des Pigmentdispergators im Herstellungsprozess des Basispigments. Werden mehr als ein Pigmentdispergator eingesetzt, so können sie gleichzeitig oder zu verschiedenen Zeitpunkten zugegeben werden oder können vor der Zugabe gemischt werden.

Die Wirksamkeit des Pigmentdispergators kann auch von seiner Teilchengröße und Teilchenform sowie vom Umfang der belegbaren Pigmentoberfläche abhängen. Es kann vorteilhaft sein, den Pigmentdispergator erst im in Aussicht genommenen Anwendungsmedium dem Basispigment zuzufügen. Die jeweilige optimale Konzentration des Pigmentdispergators muss durch orientierende Vorversuche ermittelt werden, da die Verbesserung der Eigenschaften der Basispigmente nicht immer linear mit der Pigmentdispergatormenge einhergeht.

Die erfindungsgemäßen Pigmentzubereitungen können Mischungen von einem oder mehreren, vorzugsweise 1, 2 oder 3, Basispigmenten mit einem oder mehreren, vorzugsweise 1 oder 2, der Pigmentdispergatoren sein.

Gegenstand der Erfindung ist auch ein Verfahren zur Herstellung einer erfindungsgemäßen Pigmentzubereitung, dadurch gekennzeichnet, dass man den oder die Pigmentdispergator(en) und das oder die Basispigment(e) miteinander mischt oder während ihres Herstellungsprozesses aufeinander einwirken lässt. Der Herstellungsprozess eines Diketopyrrolopyrrolpigments umfasst dessen Synthese, Feinverteilung und/oder Dispergierung, beispielsweise durch Mahlung, Knetung oder Umfällen, gegebenenfalls Finish, sowie die Isolierung als Presskuchen oder als trockenes Granulat oder Pulver. Beispielsweise kann der Pigmentdispergator vor, während oder nach einem der üblichen Verfahrensschritte wie beispielsweise der Synthese, Feinverteilungsprozess, Finish, Isolation, Trocknung oder Pulverisierung zugegeben werden. So kann beispielsweise eine Zugabe bereits bei der Synthese zu feinen Teilchen führen. Selbstverständlich kann der Pigmentdispergator auch in Teilportionen zu unterschiedlichen Zeiten zugegeben werden.

Die Zugabe des Pigmentdispergators im Rahmen eines Feinverteilungsprozesses erfolgt beispielsweise vor oder während einer Salzknetung, vor oder während einer Trockenmahlung eines Rohpigments oder vor oder während einer Nassmahlung eines Rohpigments.
Gleichfalls bewährt hat sich die Zugabe des Pigmentdispergators vor oder nach einem Finish des Basispigments in wässrigem oder wässrig-organischem Medium bei beliebigen pH-Werten oder in organischem Medium.

Der Pigmentdispergator kann auch dem vorzugsweise wasserfeuchten Pigmentpresskuchen vor der Trocknung zugesetzt und eingearbeitet werden,
wobei der Pigmentdispergator selbst ebenfalls als Presskuchen vorliegen kann. Es ist weiterhin möglich, Trockenmischungen vom Pulver oder Granulat des Pigmentdispergators mit dem Pulver oder Granulat des Basispigments vorzunehmen, oder die Mischung bei einer Mahlung oder Pulverisierung des Basispigments und des Pigmentdispergators zu erzielen.
Die erfindungsgemäßen Pigmentzubereitungen lassen sich zum Pigmentieren von hochmolekularen organischen Materialien natürlicher oder synthetischer Herkunft einsetzen, beispielsweise von Kunststoffen, Harzen, Lacken, Anstrichfarben oder elektrophotographischen Tonern und Entwicklern, sowie von Tinten und Druckfarben.

Hochmolekulare organische Materialien, die mit den genannten Pigmentzubereitungen pigmentiert werden können, sind beispielsweise Celluloseether und -ester, wie Ethylcellulose, Nitrocellulose, Celluloseacetat oder Cellulosebutyrat, natürliche Harze oder Kunstharze, wie Polymerisationsharze oder Kondensationsharze, beispielsweise Aminoplaste, insbesondere Harnstoff- und Melaminformaldehydharze, Alkydharze, Acrylharze, Phenoplaste, Polycarbonate, Polyolefine, wie Polystyrol, Polyvinylchlorid, Polyethylen, Polypropylen, Polyacrylnitril, Polyacrylsäureester, Polyamide, Polyurethane oder Polyester, Gummi, Casein, Silikon und Silikonharze, einzeln oder in Mischungen. Dabei spielt es keine Rolle, ob die erwähnten hochmolekularen organischen Verbindungen als plastische Massen, Schmelzen oder in Form von Spinnlösungen, Lacken, Anstrichstoffen oder Druckfarben vorliegen. Je nach Verwendungszweck erweist es sich als vorteilhaft, die erfindungsgemäßen Pigmentzubereitungen als Blend oder in Form von Präparationen oder Dispersionen zu benutzen. Bezogen auf das zu pigmentierende, hochmolekulare organische Material setzt man die erfindungsgemäßen Pigmentzubereitungen in einer Menge von 0,05 bis 30 Gew.-%, vorzugsweise 0,1 bis 15 Gew.-%, ein.

Die erfindungsgemäßen Pigmentzubereitungen sind auch geeignet als Farbmittel in elektrophotographischen Tonern und Entwicklern, wie beispielsweise Ein- oder Zweikomponentenpulvertonern (auch Ein- oder Zweikomponenten-Entwickler genannt), Magnettoner, Flüssigtoner, Polymerisationstoner sowie Spezialtoner.

Typische Tonerbindemittel sind Polymerisations-, Polyadditions- und Polykondensationsharze, wie Styrol-, Styrolacrylat-, Styrolbutadien-, Acrylat-, Polyester-, Phenol-Epoxidharze, Polysulfone, Polyurethane, einzeln oder in Kombination, sowie Polyethylen und Polypropylen, die noch weitere Inhaltsstoffe, wie Ladungssteuermittel, Wachse oder Fließhilfsmittel, enthalten können oder im nachhinein mit diesen Zusätzen modifiziert werden.

Des weiteren sind die erfindungsgemäßen Pigmentzubereitungen geeignet als Farbmittel in Pulver und Pulverlacken, insbesondere in triboelektrisch oder elektrokinetisch versprühbaren Pulverlacken, die zur Oberflächenbeschichtung von Gegenständen aus beispielsweise Metall, Holz, Kunststoff, Glas, Keramik, Beton, Textilmaterial, Papier oder Kautschuk zur Anwendung kommen.

Als Pulverlackharze werden typischerweise Epoxidharze, carboxyl- und hydroxylgruppenhaltige Polyesterharze, Polyurethan- und Acrylharze zusammen mit üblichen Härtern eingesetzt. Auch Kombinationen von Harzen finden Verwendung. So werden beispielsweise häufig Epoxidharze in Kombination mit carboxyl- und hydroxylgruppenhaltigen Polyesterharzen eingesetzt. Typische Härterkomponenten (in Abhängigkeit vom Harzsystem) sind beispielsweise Säureanhydride, Imidazole sowie Dicyandiamid und deren Abkömmlinge, verkappte Isocyanate, Bisacylurethane, Phenol- und Melaminharze, Triglycidylisocyanurate, Oxazoline und Dicarbonsäuren.

Außerdem sind die erfindungsgemäßen Pigmentzubereitungen als Farbmittel in Ink-Jet Tinten auf wässriger und nichtwässriger Basis sowie in solchen Tinten, die nach dem Hot-melt-Verfahren arbeiten, geeignet.

Ink-Jet-Tinten enthalten im allgemeinen insgesamt 0,5 bis 15 Gew.-%, vorzugsweise 1,5 bis 8 Gew.-%, (trocken gerechnet) einer oder mehrerer der erfindungsgemäßen Pigmentzubereitungen.

Mikroemulsionstinten basieren auf organischen Lösemitteln, Wasser und ggf. einer zusätzlichen hydrotropen Substanz (Grenzflächenvermittler).

Mikroemulsionstinten enthalten im allgemeinen 0,5 bis 15 Gew.-%, vorzugsweise 1,5 bis 8 Gew.-%, einer oder mehrerer der erfindungsgemäßen Pigmentzubereitungen, 5 bis 99 Gew.-% Wasser und 0,5 bis 94,5 Gew.-% organisches Lösungsmittel und/oder hydrotrope Verbindung.
"Solvent based" Ink-Jet-Tinten enthalten vorzugsweise 0,5 bis 15 Gew.-% einer oder mehrerer der erfindungsgemäßen Pigmentzubereitungen, 85 bis 99,5 Gew.-% organisches Lösungsmittel und/oder hydrotrope Verbindungen.

Hot-Melt-Tinten basieren meist auf Wachsen, Fettsäuren, Fettalkoholen oder Sulfonamiden, die bei Raumtemperatur fest sind und bei Erwärmen flüssig werden, wobei der bevorzugte Schmelzbereich zwischen ca. 60°C und ca. 140°C liegt. Hot-Melt Ink-Jet-Tinten bestehen z.B. im wesentlichen aus 20 bis 90 Gew.-% Wachs und 1 bis 10 Gew.-% einer oder mehrerer der erfindungsgemäßen Pigmentzubereitungen. Weiterhin können 0 bis 20 Gew.-% eines zusätzlichen Polymers (als "Farbstofflöser"), 0 bis 5 Gew.-% Dispergierhilfsmittel, 0 bis 20 Gew.-% Viskositätsveränderer, 0 bis 20 Gew.-% Plastifizierer, 0 bis 10 Gew.-% Klebrigkeitszusatz, 0 bis 10 Gew.-% Transparenzstabilisator (verhindert z.B. Kristallisation der Wachse) sowie 0 bis 2 Gew.-% Antioxidans enthalten sein. Typische Zusatzstoffe und Hilfsmittel sind z.B. in US-PS 5,560,760 beschrieben.

Weiterhin sind die erfindungsgemäßen Pigmentzubereitungen auch als Farbmittel für Farbfilter sowohl für die additive wie subtraktive Farberzeugung sowie für elektronische Tinten ("electronic inks") geeignet.

Die erfindungsgemäßen Pigmentzubereitungen eignen sich hervorragend zum Einfärben von teilkristallinen Kunststoffen. Daher ist ein weiterer Gegenstand der vorliegenden Erfindung die Verwendung der obenbeschriebenen, erfindungsgemäßen Pigmentzubereitung zum verzugsfreien Pigmentieren von teilkristallinen Kunststoffen in der Masse.

Im Sinne der vorliegenden Erfindung bedeutet der Begriff "verzugsfrei" einen im Vergleich zum unbehandelten Pigment deutlich herabgesetzten Verzug.

Unter teilkristallinen Kunststoffen werden solche verstanden, welche bei der Erstarrung kleine kristalline Kerne oder Aggregate bilden, manchmal auch nur in Gegenwart von Nukleierungsmitteln (zum Beispiel organischen Pigmenten). Teilkristalline Kunststoffe sind im allgemeinen thermoplastische hochmolekulare organische Materialien mit einem Molekulargewicht (M_{w}) von 10⁴ bis 10⁸ g/mol, bevorzugt 10⁵ bis 10⁷ g/mol, und einem Kristallinitätsgrad (X_{c}) von 10 bis 99,9%, bevorzugt von 40 bis 99%, besonders bevorzugt von 80 bis 99%. Bevorzugte teilkristalline Kunststoffe sind Homopolymere, Block- oder statistische Copolymere und Terpolymere von Ethylen, Propylen, Butylen, Styrol und/oder Divinylbenzol, insbesondere Polyolefine, wie Polyethylen (HDPE, MDPE, LDPE), Polypropylen, insbesondere Polyethylen hoher Dichte (HDPE), weiterhin auch Polystyrol, PVC, Polyester, wie Polyethylenterephthalat, Polyamide, wie Nylon 6 und Nylon 66, und thermoplastische lonomere.

Die teilkristallinen Kunststoffe können noch Additive in üblichen Mengen enthalten, wie z.B. Stabilisatoren, optische Aufheller, Füllmittel und Gleitmittel.

Bei der Einfärbung der teilkristallinen Kunststoffe wird die erfindungsgemäße Pigmentzubereitung zweckmäßigerweise in einer Menge von 0,01 bis 5 Gew.-%, vorzugsweise 0,05 bis 1 Gew.-%, bezogen auf das Gewicht des Kunststoffs, eingesetzt. Die Einfärbung selbst kann nach üblichen Methoden, wie z.B. durch Extrusion, erfolgen.

Die Prüfung der Verzugsbeeinflussung von Polyolefin durch die erfindungsgemäße Pigmentzubereitung erfolgt an einem Spritzgussfertigteil in Form einer Platte.
Nach der Alterung werden die Dimensionen der Platte (Länge, Breite) ausgemessen und so der Verzug ermittelt.

Die erfindungsgemäßen Pigmentzubereitungen besitzen ein verbessertes Ausblutverhalten laut DIN EN 20105-A03 und eine erhöhte Temperaturbeständigkeit gemäß DIN EN 12877 gegenüber in EP 952 183 beschriebenen Mischungen.

In den folgenden Beispielen bedeuten Prozentangaben Gewichtsprozente, sofern nicht anders angegeben.

### Beispiel 1

13,5 Teile P.R.254, hergestellt nach dem in EP 94 911 offenbarten Verfahren, werden in einer Mischung aus 150 Teilen Wasser und 150 Teilen tert.-Amylalkohol angerührt. Nach Zugabe von 1,5 Teilen Pigmentdispergator der Formel (X),

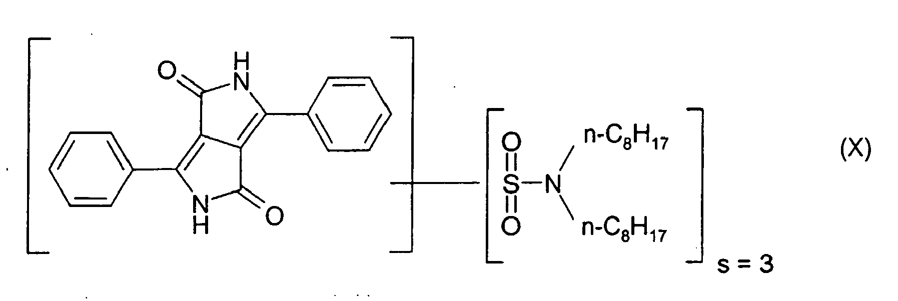

hergestellt gemäß Beispiel 4, wird mit Essigsäure auf pH 5 gestellt und 10 Stunden bei 85°C gerührt. Mit Wasserdampfdestillation wird der Amylalkohol entfernt, die Suspension wird filtriert, der Presskuchen mit Wasser gewaschen, bei 80°C getrocknet und gemahlen. Man erhält 13,6 Teile Pigmentzubereitung.

Mit der Pigmentzubereitung werden Polyethylen-Platten (600 g ®Novolen und 0,6 g Pigmentzubereitung) pigmentiert und der Verzug bestimmt.

Methode: Schwindungs-Prüfung organischer Pigmente in Polyethylen im Spritzguss. Als Formplatte dient eine rechteckige Platte mit Filmanguss und den Maßen 60 mal 60 mm. Die Auswertung erfolgt durch Vermessen längs und quer zur Spritzrichtung. Es werden jeweils 10 Spritzlinge hergestellt und vermessen, wobei der jeweilige Durchschnittswert Anwendung findet. Als Nullprobe werden 10 Spritzlinge aus nichtpigmentiertem Kunststoff verwendet. Dabei ist es wichtig, dass dieses Material exakt die gleiche Aufbereitung erfährt wie das pigmentierte System.

Die mit der erfindungsgemäßen Pigmentzubereitung pigmentierten Polyethylen-Platten weisen einen deutlich niedrigeren Verzug auf als obiges P.R.254 ohne Pigmentdispergator.

### Beispiel 2 (Vergleich)

Wenn das P.R.254, hergestellt nach dem in EP 94911 offenbarten Verfahren, mit dem Pigmentdispergator aus DE 19958181, hergestellt gemäß Beispiel 10a, behandelt wird, zeigt diese Pigmentzubereitung einen wesentlich stärkeren Verzug verglichen mit der erfindungsgemäßen Pigmentzubereitung gemäß Beispiel 1.

### Beispiel 3 (Vergleich)

Das mit dem Pigmentdispergator aus EP 952183 additivierte P.R 254 Chromophtal-Rot 2028 zeigt eine geringere Ausblutechtheit mit einem Wert von 4 laut DIN EN 20105-A03 verglichen mit der erfindungsgemäßen Pigmentzubereitung gemäß Beispiel 1 mit einer Ausblutechtheit von 4-5.

### Beispiel 4

50 Teile eines handelsüblichen P.R.255 werden in 500 Teile Chlorsulfonsäure eingetragen und 3 Stunden bei 80°C gerührt. Nach Abkühlen auf 50°C werden 53,8 Teile Thionylchlorid zugetropft und 2 Stunden bei 60°C gerührt. Nach Abkühlen auf Raumtemperatur wird die Mischung auf ein Gemisch aus 400 Teilen Wasser und 800 Teile Eis geschüttet, die Suspension filtriert, der Presskuchen mit Eiswasser gewaschen und in 1000 Teilen Wasser angerührt. Es wird 3 Stunden unter Rückfluss gerührt, bei 60°C werden 300 Teile Salzsäure 33 %ig zugegeben, auf 15°C abgekühlt, filtriert und mit 10 %iger Salzsäure gewaschen. 69 Teile des Presskuchens werden in 700 Teile Toluol eingetragen und das Wasser wird abdestilliert. Bei 50°C werden 26,9 Teile Thionylchlorid in 30 Minuten zugetropft. Es wird 2 Stunden bei 55°C gerührt und das überschüssige Thionylchlorid unter Vakuum bei 50°C abdestilliert. Dann werden 83,8 Teile Dioctylamin zugegeben und 2 Stunden bei 60°C gerührt. Die Suspension wird filtriert, mit Toluol, Ethanol und Wasser gewaschen und der Presskuchen bei 80°C getrocknet. Es werden 32,4 Teile Pigmentdispergator der Formel (X) erhalten.

### Beispiel 5

### 6,8 Teile DPP-Derivat der Formel (XI)

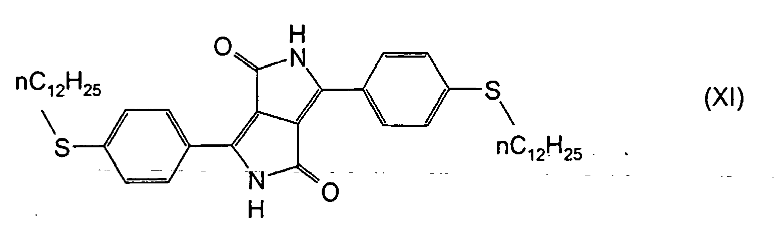

werden in 100 Teile Eisessig eingetragen und durch Zutropfen von 4,9 Teilen Wasserstoffperoxid 35 %ig bei 10°C oxidiert. Nach dem Zutropfen wird 4 Stunden bei Raumtemperatur gerührt, die Mischung wird auf 120 Teile Eiswasser gegossen. Das Produkt wird filtriert, gewaschen und getrocknet.

Es werden 5,9 Teile Pigmentdispergator der Formel (XII) erhalten.

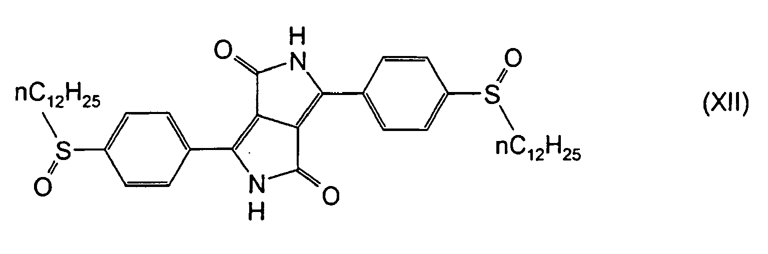

### Beispiel 6

95 Teile P.R.254 werden mit 5 Teilen Pigmentdispergator der Formel (XII), hergestellt gemäß Beispiel 5, vermischt. Es werden farbstarke Färbungen mit reinem Farbton in Polyethylen erhalten. Der Verzug der mit dieser Mischung pigmentierten Polyethylenplatten ist deutlich erniedrigt.

### Beispiel 7

3,46 Teile DPP-Derivat der Formel (XII) werden in 265 Teile Methylenchlorid eingetragen und auf 0°C abgekühlt. Eine Lösung aus 2,73 Teilen 3-Chlorperbenzoesäure 70 %ig in 93 Teilen Methylenchlorid wird in 20 Minuten bei 0°C zugetropft. Dann wird 5 Stunden bei Raumtemperatur gerührt. Es wird zweimal mit 10 %iger wässriger Natriumsulfidlösung gewaschen und das Methylenchlorid abdestilliert.
Es werden 1,8 Teile Pigmentdispergator der Formel (XIII) erhalten.

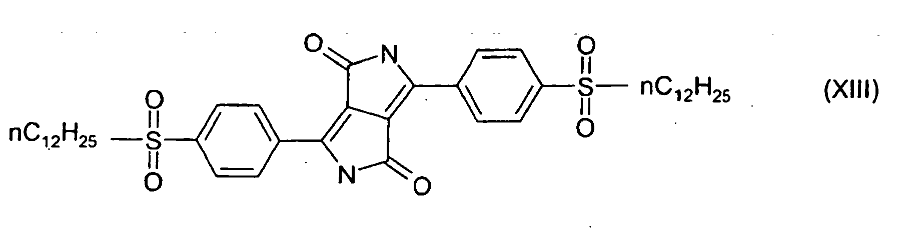

### Beispiel 8

95 Teile P.R.254 werden mit 5 Teilen Pigmentdispergator, hergestellt gemäß Beispiel 7 vermischt. Es werden farbstarke Färbungen mit reinem Farbton in Polyethylen erhalten. Der Verzug der mit dieser Mischung pigmentierten Polyethylenplatten ist deutlich erniedrigt.

## Patentansprüche

1. Pigmentzubereitung, **gekennzeichnet durch** einen Gehalt an
a) mindestens einem Diketopyrrolopyrrolpigment der Formel (V) als Basispigment, 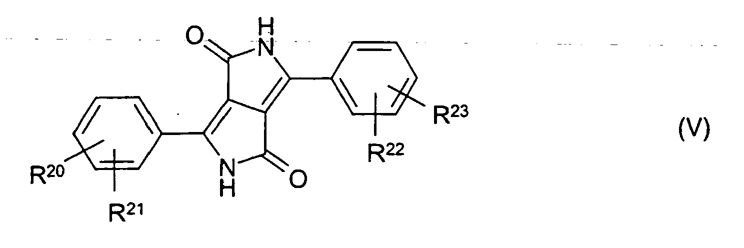 worin
R²⁰, R²¹, R²² und R²³ unabhängig voneinander Wasserstoff, Halogen, C₁-C₄-Alkyl, C₁-C₄-Alkoxy, Cyano oder Phenyl bedeuten;
und
b) mindestens einem Pigmentdispergator der Formel (I), 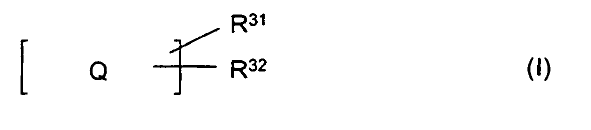
worin
R³¹ einen Rest der Formel (VI), (VIII) oder (IX) darstellt,
R³² einen Rest der Formel (VII) darstellt,
s oder t eine Zahl von 0,1 bis 4,0 darstellen, 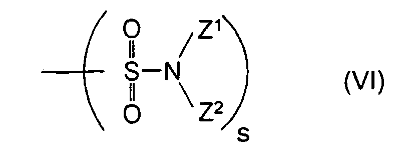 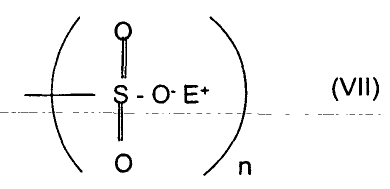 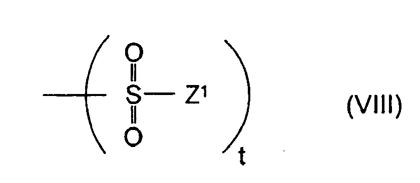 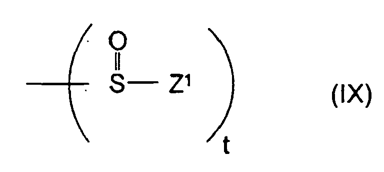
n eine Zahl von 0 bis 2 darstellt, mit der Maßgabe, dass n die Zahl 0 darstellt, wenn R³¹ einen Rest der Formel (VIII) oder (IX) darstellt,
E⁺ H⁺ oder das Äquivalent M^{m+}/m eines Metallkations M^{m+} aus der 1. bis 5. Hauptgruppe oder aus der 1. oder 2. oder der 4. bis 8. Nebengruppe des Periodensystems der chemischen Elemente bezeichnet, wobei m eine der Zahlen 1, 2 oder 3 ist; ein Ammoniumion N⁺R⁹R¹⁰R¹¹R¹², wobei die Substituenten R⁹, R¹⁰, R¹¹ und R¹² unabhängig voneinander jeweils ein Wasserstoffatom, C₁-C₃₀-Alkyl, C₂-C₃₀-Alkenyl, C₅-C₃₀-Cycloalkyl, Phenyl, (C₁-C₈)-Alkyl-phenyl, (C₁-C₄)-Alkylen-phenyl, oder eine (Poly)alkylenoxy-gruppe der Formel -[CH(R⁸⁰)-CH(R⁸⁰)-O]ₖ-H sind, in der k eine Zahl von 1 bis 30 ist und die beiden Reste R⁸⁰ unabhängig voneinander Wasserstoff, C₁-C₄-Alkyl oder, sofern k > 1 ist, eine Kombination davon bedeuten;
und worin als R⁹, R¹⁰, R¹¹, und/oder R¹² ausgewiesenes Alkyl, Alkenyl, Cycloalkyl, Phenyl oder Alkylphenyl **durch** Amino, Hydroxy, und/oder Carboxy substituiert sein können;
oder wobei die Substituenten R⁹ und R¹⁰ zusammen mit dem quartären N-Atom ein fünf- bis siebengliedriges gesättigtes Ringsystem, das ggf. noch weitere Heteroatome aus der Gruppe O, S und N enthält, bilden können; oder wobei die Substituenten R⁹, R¹⁰, und R¹¹ zusammen mit dem quartären N-Atom ein fünf- bis siebengliedriges aromatisches Ringsystem, das ggf. noch weitere Heteroatome aus der Gruppe O, S und N enthält und an dem ggf. zusätzliche Ringe ankondensiert sind, bilden können;
oder worin E⁺ ein Ammoniumion der Formel (Ic) definiert, 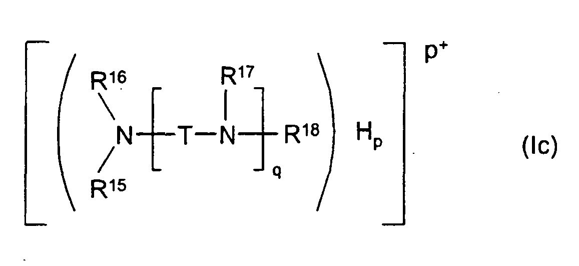 worin
R¹⁵, R¹⁶, R¹⁷ und R¹⁸ unabhängig voneinander Wasserstoff oder eine (Poly)alkylenoxygruppe der Formel -[CH(R⁸⁰)-CH(R⁸⁰)O]ₖ-H bedeuten, in der k eine Zahl von 1 bis 30 ist und die beiden Reste R⁸⁰ unabhängig voneinander Wasserstoff, C₁-C₄-Alkyl oder, sofern k > 1 ist, eine Kombination davon bedeuten;
q eine Zahl von 1 bis 10;
p eine Zahl von 1 bis 5, wobei p ≤q+1 ist;
T einen verzweigten oder unverzweigten C₂-C₆-Alkylenrest bedeutet; oder worin T, wenn q > 1 ist, auch eine Kombination von verzweigten oder unverzweigten C₂-C₆-Alkylenresten sein kann;
Z¹ und Z² gleich oder verschieden sind und Wasserstoff oder C₁-C₃₀-Alkyl- oder C₁-C₃₀-Alkenyl-Reste bedeuten, die linear oder verzweigt und unsubstituiert oder **durch** Halogen, Hydroxy, Hydroxycarbonyl oder C₁-C₆-Alkoxy substituiert sind, wobei der Alkenylrest ein- oder mehrfach ungesättigt sein kann, mit der Maßgabe, dass Z¹ und Z² nicht gleichzeitig Wasserstoff bedeuten;
und
Q ein Rest einer Diketopyrrolopyrrolverbindung der Formel (la) ist, 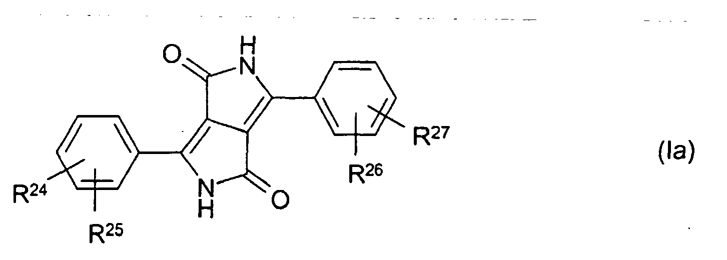
worin R²⁴, R²⁵, R²⁶ und R²⁷ unabhängig voneinander Wasserstoff, Halogen, (C₁-C₄)-Alkyl, (C₁-C₄ )-Alkoxy oder Cyano bedeuten.

2. Pigmentzubereitung nach Anspruch 1, **dadurch gekennzeichnet, dass** s oder t gleich 0,2 bis 3,0 und n gleich 0 bis 0,5 sind.

3. Pigmentzubereitung nach Anspruch 1 oder 2, **dadurch gekennzeichnet, dass**
Z¹ und Z² gleich oder verschieden sind und C₂-C₁₆-Alkyl bedeuten,
R²⁴ und R²⁶ jeweils Wasserstoff, und
R²⁵ und R²⁷ Wasserstoff, Methyl, tert.-Butyl, Chlor oder Cyano bedeuten.

4. Pigmentzubereitung nach mindestens einem der Ansprüche 1 bis 3, **dadurch gekennzeichnet, dass** im Basispigment der Formel (V)
R²¹ und R²³ jeweils Wasserstoff, und
R²⁰ und R²² gleich oder verschieden sind und Wasserstoff, Methyl, tert.-Butyl, Chlor, Cyano oder Phenyl bedeuten.

5. Pigmentzubereitung nach mindestens einem der Ansprüche 1 bis 4,
**dadurch**
**gekennzeichnet, dass** das Basispigment C.I. Pigment Orange 71, 73, 81, C.I. Pigment Red 254, 255, 264, 270 oder 272 ist.

6. Pigmentzubereitung nach mindestens einem der Ansprüche 1 bis 5, bestehend im wesentlichen aus
a) 50 bis 99,9 Gew.-% mindestens eines Basispigments gemäß a),
b) 0,1 bis 25 Gew.-% mindestens eines Pigmentdispergators gemäß b), und
c) 0 bis 25 Gew.-% an Hilfsmitteln,
wobei die Anteile der jeweiligen Komponenten auf das Gesamtgewicht der Zubereitung (100 Gew.-%) bezogen sind.

7. Verfahren zur Herstellung einer Pigmentzubereitung nach mindestens einem der Ansprüche 1 bis 6, **dadurch gekennzeichnet, dass** man den oder die Pigmentdispergator(en) und das oder die Basispigment(e) miteinander mischt oder während ihres Herstellungsprozesses, umfassend Synthese, Feinverteilung, Dispergierung, gegebenenfalls Finish, sowie die Isolierung als Presskuchen oder als trockenes Granulat oder Pulver, aufeinander einwirken lässt.

8. Verwendung einer Pigmentzubereitung nach einem oder mehreren der Ansprüche 1 bis 6 zum Pigmentieren von Kunststoffen, Harzen, Lacken, Anstrichfarben oder elektrophotographischen Tonern und Entwicklern, sowie von Tinten, Druckfarben und Farbfiltern.

9. Verwendung nach Anspruch 8 zum verzugsfreien Pigmentieren von teilkristallinen Kunststoffen in der Masse.

10. Verwendung nach Anspruch 9, **dadurch gekennzeichnet, dass** der teilkristalline Kunststoff ein Homopolymer, Block- oder statistisches Copolymer oder Terpolymer von Ethylen, Propylen, Butylen, Styrol und/oder Divinylbenzol ist.

11. Verwendung nach Anspruch 9 oder 10, **dadurch gekennzeichnet, dass** der teilkristalline Kunststoff ein Polyethylen, ein Polypropylen, Polystyrol, PVC, ein Polyester, ein Polyamid oder ein thermoplastisches lonomer ist.

12. Verwendung nach einem oder mehreren der Ansprüche 9 bis 11, **dadurch gekennzeichnet, dass** der teilkristalline Kunststoff HDPE, MDPE, LDPE, Polyethylenterephthalat, Nylon 6 oder Nylon 66 ist.

## Claims

1. A pigment preparation comprising
a) at least one diketopyrrolopyrrole pigment of the formula (V) as a base pigment, 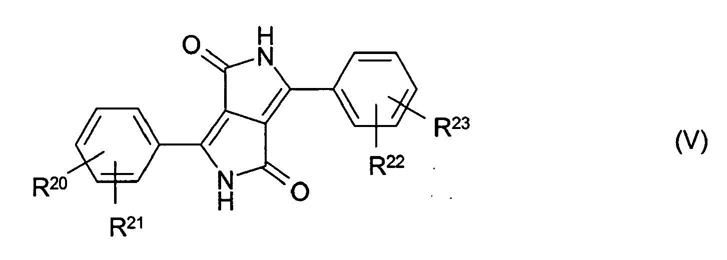 where
R²⁰, R²¹, R²² and R²³ are independently hydrogen, halogen, C₁-C₄₋alkyl, C₁-C₄-alkoxy, cyano or phenyl;
and
b) at least one pigment dispersant of the formula (I), 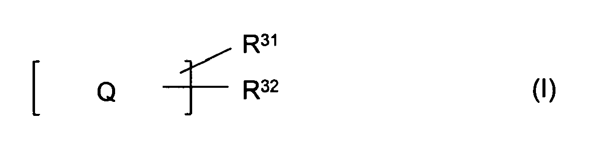
where
R³¹ is a radical of the formula (VI), (VIII) or (IX),
R³² is a radical of the formula (VII),
s or t are a number from 0.1 to 4.0, 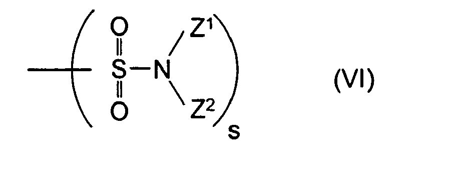 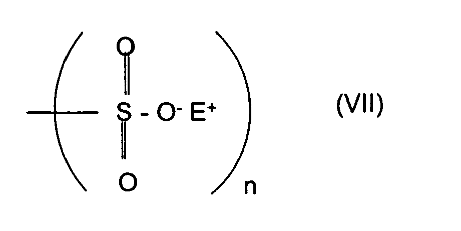 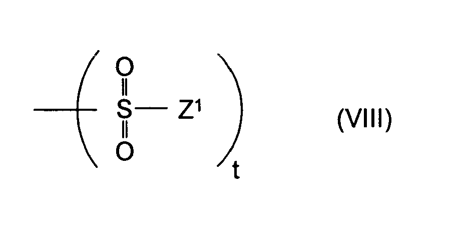 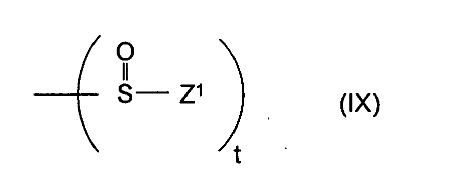
n is a number from 0 to 2, with the proviso that n is 0 when R³¹ is a radical of the formula (VIII) or (IX),
E⁺ is H⁺ or the equivalent M^{m}+/m of a metal cation M^{m+} from the 1st to 5th main group or from the 1 st or 2nd or from the 4th to 8th transition group of the periodic table of chemical elements, m being one of 1, 2 or 3; an ammonium ion N⁺R⁹R¹⁰R¹¹R¹², where the substituents R⁹, R¹⁰, R¹¹ and R¹² are each independently a hydrogen atom, C₁-C₃₀-alkyl, C₂-C₃₀-alkenyl, C₅-C₃₀-cycloalkyl, phenyl, (C₁-C₈)-alkylphenyl, (C₁-C₄)-alkylenephenyl, or a (poly)alkyleneoxy group of the formula -[CH(R⁸⁰)-CH(R⁸⁰)-O]ₖ-H, where k is a number from 1 to 30 and the two R⁸⁰ radicals are independently hydrogen, C₁-C₄-alkyl or, when k is > 1, a combination thereof;
and wherein R⁹, R¹⁰, R¹¹ and/or R¹² alkyl, alkenyl, cycloalkyl, phenyl or alkylphenyl may each be substituted by amino, hydroxyl and/or carboxyl;
or where the substituents R⁹ and R¹⁰ may combine with the quaternary nitrogen atom to form a five-, six- or seven-membered saturated ring system which if appropriate contains still further heteroatoms selected from the group consisting of O, S and N;
or where the substituents R⁹, R¹⁰ and R¹¹ may combine with the quaternary nitrogen atom to form a five-, six- or seven-membered aromatic ring system which if appropriate contains still further heteroatoms selected from the group consisting of O, S and N and which has if appropriate additional rings fused onto it;
or wherein E⁺ defines an ammonium ion of the formula (lc) 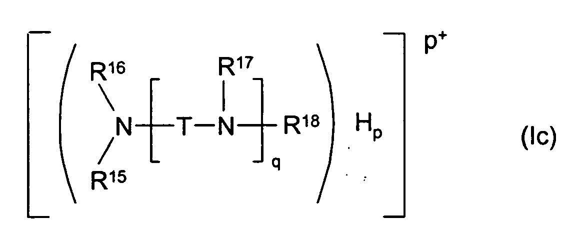 where
R¹⁵, R¹⁶, R¹⁷ and R¹⁸ are independently hydrogen or a (poly)alkyleneoxy group of the formula -[CH(R⁸⁰)-CH(R⁸⁰)O]ₖ-H, where k is a number from 1 to 30 and the two R⁸⁰ radicals are independently hydrogen, C₁-C₄-alkyl or, when k > 1, a combination thereof;
q is a number from 1 to 10;
p is a number from 1 to 5, subject to the proviso that p ≤q+1;
T is a branched or unbranched C₂-C₆-alkylene radical; or where T when q is > 1 may also be a combination of branched or unbranched C₂-C₆-alkylene radicals;
Z¹ and Z² are the same or different and are hydrogen or C₁-C₃₀-alkyl or C₁-C₃₀-alkenyl radicals which are linear or branched and unsubstituted or halogen-, hydroxyl-, hydroxycarbonyl- or C₁₋C₆-alkoxy-substituted, wherein the alkenyl radical may be singly or multiply unsaturated, with the proviso that Z¹ and Z² are not both hydrogen;
and
Q is a radical of a diketopyrrolopyrrole compound of the formula (Ia) 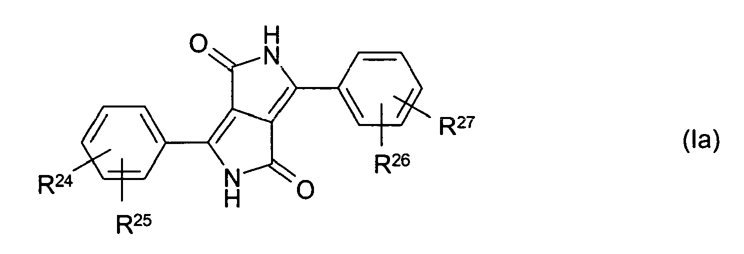
where R²⁴, R²⁵, R²⁶ and R²⁷ are independently hydrogen, halogen, (C₁-C₄)-alkyl, (C₁-C₄)-alkoxy or cyano.

2. The pigment preparation according to claim 1 wherein s or t is 0.2 to 3.0 and n is 0 to 0.5.

3. The pigment preparation according to claim 1 or 2 wherein
Z¹ and Z² are the same or different and are each C₂-C₁₆-alkyl,
R²⁴ and R²⁶ are each hydrogen and
R²⁵ and R²⁷ are each hydrogen, methyl, tert-butyl, chlorine or cyano.

4. The pigment preparation according to at least one of claims 1 to 3 wherein the base pigment of the formula (V) has
R²¹ and R²³ both hydrogen and
R²⁰ and R²² the same or different and each hydrogen, methyl, tert-butyl, chlorine, cyano or phenyl.

5. The pigment preparation according to at least one of claims 1 to 4 wherein the base pigment is C.I. Pigment Orange 71, 73, 81, C.I. Pigment Red 254, 255, 264, 270 or 272.

6. The pigment preparation according to at least one of claims 1 to 5 that consists essentially of
a) 50% to 99.9% by weight of at least one base pigment according to a),
b) 0.1 % to 25% by weight of at least one pigment dispersant according to b), and
c) 0% to 25% by weight of auxiliaries,
the fractions of the respective components being based on the total weight of the preparation (100% by weight).

7. A process for producing a pigment preparation according to at least one of claims 1 to 6, which comprises the pigment dispersant or dispersants and the base pigment or pigments being mixed with each other or being allowed to act on each other during their manufacturing operation, which comprises synthesis, fine division, dispersion, if appropriate finishing, and also isolation as a presscake or as a dry granulate or powder.

8. The use of a pigment preparation according to one or more of claims 1 to 6 for pigmentation of plastics, resins, coatings, paints or electrophotographic toners and developers and also of inks, including printing inks, and color filters.

9. The use according to claim 8 for warpage-free mass pigmentation of partly crystalline plastics.

10. The use according to claim 9 wherein the partly crystalline plastic is a homopolymer, block copolymer or random copolymer or terpolymer of ethylene, propylene, butylene, styrene and/or divinylbenzene.

11. The use according to claim 9 or 10 wherein the partly crystalline plastic is a polyethylene, polypropylene, polystyrene, PVC, a polyester, a polyamide or a thermoplastic ionomer.

12. The use according to one or more of claims 9 to 11 wherein the partly crystalline plastic is HDPE, MDPE, LDPE, polyethylene terephthalate, nylon 6 or nylon 66.

## Revendications

1. Préparation de pigment, **caractérisée par** une certaine teneur en
a) au moins un pigment dicétopyrrolopyrrole de formule (V) en tant que pigment de base, 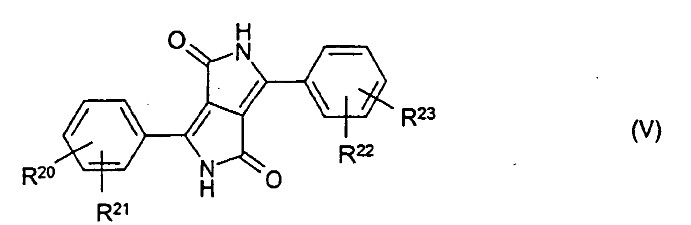 dans laquelle
R²⁰, R²¹, R²² et R²³ représentent, indépendamment les uns des autres, un atome d'hydrogène, un atome d'halogène, un groupe alkyle en C₁ à C₄, alcoxy en C₁ à C₄, cyano ou phényle ;
et
b) au moins un dispersant de pigment de formule (I), 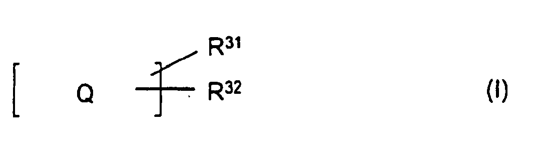
dans laquelle
R³¹ représente un groupe de formule (VI), (VIII) ou (IX),
R³² représente un groupe de formule (VII),
s ou t représente un nombre de 0,1 à 4,0, 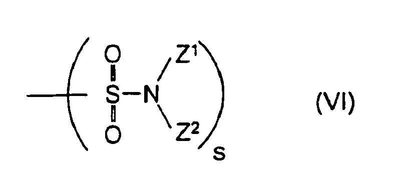 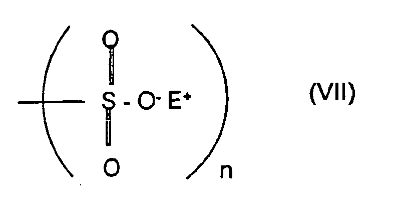 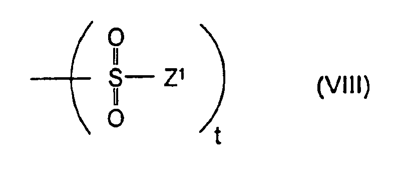 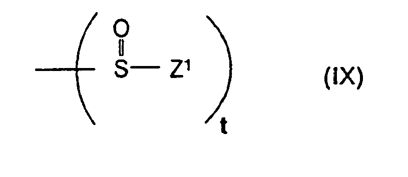
n représente un nombre de 0 à 2, à condition que n représente le nombre 0 si R³¹ représente un groupe de formule (VIII) ou (IX),
E⁺ représente H⁺ ou l'équivalent M^{m+}/m d'un cation métallique M^{m+} du groupe principal 1 à 5 ou du sous-groupe 1 ou 2 ou 4 à 8 de la Classification Périodique des Eléments, où m représente un des nombres 1, 2 ou 3 ; un ion ammonium N⁺R⁹R¹⁰R¹¹R¹²,
où les substituants R⁹, R¹⁰, R¹¹ et R¹² représentent chacun, indépendamment les uns des autres, un atome d'hydrogène, un groupe alkyle en C₁ à C₃₀, alcényle en C₂ à C₃₀, cycloalkyle en C₅ à C₃₀, phényle, (alkyle en C₁ à C₈)-phényle, (alkylène en C₁ à C₄)-phényle, ou un groupe poly(oxyde d'alkylène) de formule -[CH(R⁸⁰)-CH(R⁸⁰)-O]ₖ-H, dans lequel k représente un nombre de 1 à 30 et les deux groupes R⁸⁰ représentent, indépendamment l'un de l'autre, un atome d'hydrogène, un groupe alkyle en C₁ à C₄ ou, si k > 1, une combinaison de ceux-ci ;
et dans laquelle les groupes alkyle, alcényle, cycloalkyle, phényle ou alkylphényle définis en tant que substituants R⁹; R¹⁰, R¹¹ et/ou R¹² peuvent être substitués par un groupe amino, hydroxy et/ou carboxy ;
ou les substituants R⁹ et R¹⁰ peuvent former, conjointement avec l'atome d'azote quaternaire, un système cyclique saturé de cinq à sept éléments, qui peut éventuellement contenir d'autres hétéroatomes du groupe constitué par O, S et N ; ou les substituants R⁹, R¹⁰ et R¹¹ peuvent former, conjointement avec l'atome d'azote quaternaire, un_ système cyclique aromatique de cinq à sept éléments, qui peut éventuellement contenir d'autres hétéroatomes du groupe constitué par O, S et N et sur lequel des cycles supplémentaires sont éventuellement condensés ;
ou dans laquelle E⁺ représente un ion ammonium de formule (Ic), 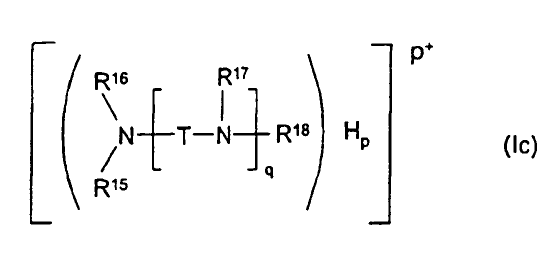 dans laquelle
R¹⁵, R¹⁶, R¹⁷ et R¹⁸ représentent, indépendamment les uns des autres, un atome d'hydrogène ou un groupe poly(oxyde d'alkylène) de formule -[CH(R⁸⁰)-CH(R⁸⁰)O]ₖ-H, dans laquelle k représente un nombre de 1 à 30 et les deux groupes R⁸⁰ représentent, indépendamment l'un de l'autre, un atome d'hydrogène, un groupe alkyle en C₁ à C₄ ou, si k > 1, une combinaison de ceux-ci ;
q représente un nombre de 1 à 10 ;
p représente un nombre de 1 à 5, où p ≤ q+1 ;
T représente un groupe alkylène en C₂ à C₆ ramifié ou non ramifié ; ou dans laquelle T, si q > 1, peut également représenter une combinaison de groupes alkylène en C₂ à C₆ ramifiés ou non ramifiés ;
Z¹ et Z² sont identiques ou différents et représentent un atome d'hydrogène ou un groupe alkyle en C₁ à C₃₀ ou alcényle en C₁ à C₃₀, qui est linéaire ou ramifié et non substitué ou substitué par un atome d'halogène, un groupe hydroxy, hydroxycarbonyle ou alcoxy en C₁ à C₆, le groupe alcényle pouvant être mono- ou poly-insaturé, à condition que Z¹ et Z² ne représentent pas en même temps un atome d'hydrogène ;
et
Q représente un groupe d'un composé de dicétopyrrolopyrrole de formule (Ia), 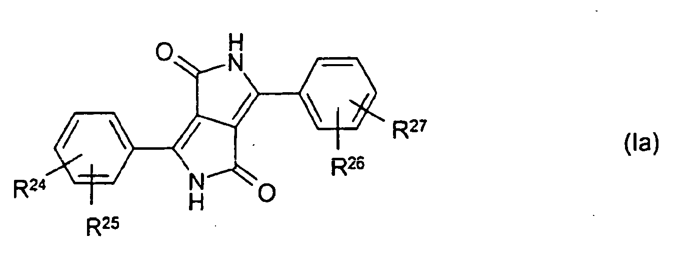
dans laquelle R²⁴, R²⁵, R²⁶ et R²⁷ représentent, indépendamment les uns des autres, un atome d'hydrogène, un atome d'halogène, un groupe alkyle en C₁ à C₄, alcoxy en C₁ à C₄ ou cyano.

2. Préparation de pigment selon la revendication 1, **caractérisée en ce que** s ou t valent 0,2 à 3,0 et n vaut 0 à 0,5.

3. Préparation de pigment selon la revendication 1 ou 2, **caractérisée en ce que**
Z¹ et Z² sont identiques ou différents et représentent un groupe alkyle en C₂ à C₁₆,
R²⁴ et R²⁶ représentent chacun un atome d'hydrogène, et
R²⁵ et R²⁷ représentent un atome d'hydrogène, un groupe méthyle, tert-butyle, chloro ou cyano.

4. Préparation de pigment selon au moins l'une quelconque des revendications 1 à 3, **caractérisée en ce que**, dans le pigment de base de formule (V)
R²¹ et R²³ représentent chacun un atome d'hydrogène, et
R²⁰ et R²² sont identiques ou différents et représentent un atome d'hydrogène, un groupe méthyle, tert-butyle, chloro, cyano ou phényle.

5. Préparation de pigment selon au moins l'une quelconque des revendications 1 à 4, **caractérisée en ce que**.le pigment de base est C.I. Pigment Orange 71, 73, 81, C.I. Pigment Red 254, 255, 264, 270 ou 272.

6. Préparation de pigment selon au moins l'une quelconque des revendications 1 à 5, essentiellement composée de
a) 50% à 99,9% en poids d'au moins un pigment de base selon a),
b) 0,1% à 25% en poids d'au moins un dispersant de pigment selon b), et
c) 0% à 25% en poids d'adjuvants,
les proportions de chaque composant se rapportant au poids total de la préparation (100% en poids).

7. Procédé de fabrication d'une préparation de pigment selon au moins l'une quelconque des revendications 1 à 6, **caractérisé en ce que** l'on mélange le ou les dispersants de pigment et le ou les pigments de base ensemble, ou **en ce qu'**on les laisse réagir entre eux pendant leur procédé de préparation comprenant une synthèse, une division fine, une dispersion, éventuellement une finition, ainsi qu'un isolement sous forme de gâteau de filtre-presse ou sous forme de granulés ou de poudre secs.

8. Utilisation d'une préparation de pigment selon l'une quelconque ou plusieurs des revendications 1 à 6 pour la pigmentation de matières plastiques, de résines, de vernis, de peintures ou de toners et de révélateurs électrophotographiques, ainsi que d'encres, d'encres d'imprimerie et de filtres colorés.

9. Utilisation selon la revendication 8 pour la pigmentation sans voile de matières plastiques semicristallines dans la masse.

10. Utilisation selon la revendication 9, **caractérisée en ce que** la matière plastique semicristalline est un homopolymère, un copolymère ou terpolymère séquencé ou statistique d'éthylène, de propylène, de butylène, de styrène et/ou de divinylbenzène.

11. Utilisation selon la revendication 9 ou 10, **caractérisée en ce que** la matière plastique semicristalline est un polyéthylène, un polypropyle, un polystyrène, un PVC, un polyester, un polyamide ou un ionomère thermoplastique.

12. Utilisation selon l'une quelconque ou plusieurs des revendications 9 à 11, **caractérisée en ce que** la matière plastique semicristalline est HDPE, MDPE, LDPE, le poly(téréphtalate d'éthylène), Nylon 6 ou Nylon 66.
